# EUROPEAN PATENT SPECIFICATION

(11) **EP 3 421 847 B1**
(45) Date of publication and mention of the grant of the patent: **13.11.2019**
(21) Application number: 18172160.6
(22) Date of filing: 14.05.2018
(51) Int. Cl.: F16K 17/04, F16K 17/06

(54) **SAFETY BYPASS VALVE**
SICHERHEITSBYPASSVENTIL
SOUPAPE DE DÉRIVATION DE SÉCURITÉ

(30) Priority: 26.06.2017 US 201715633509
(43) Date of publication of application: 02.01.2019
(73) Proprietor: Bell Helicopter Textron Inc., Fort Worth, TX 76101 (US)
(72) Inventor: POSTER, Scott David, Arlington, TX Texas 76016 (US)
(74) Representative: Barker Brettell LLP

(56) References cited:
- US-A- 4 660 595
- US-A- 5 215 116
- US-A1- 2009 013 972

## Description

### BACKGROUND

Pressurized fluid systems that include equipment that is susceptible to damage caused by excessive pressure often include a pressure sensitive bypass valve. Presently available bypass valves utilize a spring biased poppet. The spring maintains the poppet in a closed position. If the fluid pressure reaches a predetermined level, the fluid pressure compresses the spring, opening the valve, and allowing the fluid to escape through an outlet in the bypass valve. The diversion of the fluid through the bypass valve saves the pressure sensitive equipment from being damaged. It also prevents the fluid from reaching its intended destination.

One example of such a pressurized fluid delivery system is included on an engine. An engine includes a series of channel through which oil is pumped under pressure from a sump to the moving parts and back to the sump, providing lubrication and aiding in the cooling of the engine. If there is a blockage in the channel, thereby causing the pressure to increase, the bypass valve is activated and the oil does not circulate through the engine. Instead, the oil pumped from the sump is diverted through the bypass valve and returns to the sump. Running an engine for an extended period of time without the circulation of oil can destroy the engine. As such, it is imperative to turn off the engine as soon as possible to fix the oil delivery system and prevent damage to the engine.

The design of existing bypass valves leave the valve in the open position if the spring fails. As such, one broken spring in one bypass valve can force a rotorcraft to divert its course and land for service. Given the mission critical nature of military and rescue rotorcraft, there exists a need for an improved bypass valve that does not mimic the behavior of over-pressurization in the event of spring failure.

US 2009/013,972 (A1) discloses a system and method for automatically priming a fuel system by bleeding/purging air or vapor therefrom. The system includes a bleed valve configured to automatically move between three positions in response to the pressure of the fuel in the system. When fuel pressure is in a first pressure range, the bleed valve automatically moves to a first-closed position for preventing fuel from draining to the fuel tank and thereby drawing air into the fuel system. When the fuel pressure moves to a second, higher pressure range, the bleed valve automatically moves to an open position for bleeding air out of the fuel system and into the tank, thereby priming the fuel system. When the fuel pressure moves to a third, still higher pressure range, the bleed valve automatically moves to a second-closed position so as to not interfere with the regulation of the pressure regulating valve.

US 4,660,595 (A) discloses a pressure-limiting valve that comprises a cylindrical actuator piston guided displaceably in a bore and held under the pressure of a spring in the closure position of the valve. Longitudinally-directed throughflow passages are formed in the actuator piston on the pressure-loaded end and are arranged concentrically with respect to the central axis and open into an annular groove extending around and in the circumferential surface of the actuator piston. The groove is sealed off by a gasket mounted in the bore wall. When the set pressure predetermined by the closure spring is exceeded, the actuator piston travels with the gasket over the annular groove so that the pressure medium can flow away through the outlet opening.

US 5,215,116 (A) discloses a pressure limiting valve having high flow rates, especially for use as a safety valve with mine props and the like, uses a tubular main valve member whose interior communicates with the valve inlet and has lateral bores opening into the valve outlet when the bores are shifted past a sealing ring in the valve housing. A pilot valve body is received in the tubular valve and the valve spring bears upon the tubular valve. The main valve is shifted by differential pressure.

### SUMMARY

According to the present disclosure, there is provided a bypass valve according to claim 1 and a fluid movement system according to claim 2. Optional features of the bypass valve and the fluid movement system are set out in the dependent claims.

An embodiment of the disclosure provides a housing that defines a chamber within. The chamber includes an inlet at a proximal end of the chamber and an outlet in a sidewall of the housing. Within the chamber are a poppet and a spring. The poppet includes a partition that is configured to extend across the width of the chamber. The poppet includes a sidewall extending from the partition to a first end. The first end is configured to face the inlet at the proximal end of the chamber. The sidewall of the poppet includes an opening therethough. The spring is located between the distal end of the chamber and the poppet and is configured to bias the poppet in to a first position, toward the inlet. In the first position, communication between the inlet and the outlet is blocked by the poppet.

Under normal operating pressure, the spring holds the poppet in the first position and the pressurized fluid flows past the inlet and circulates through the desired channel. If the fluid pressure rises above a predetermined acceptable limit, the pressure compresses the spring and slides the poppet to a second position. In the second position, the opening in the sidewall of the poppet aligns with the outlet in the sidewall of the housing, thereby permitting the pressurized fluid to pass through the bypass valve and relieve the excess pressure. In the case of spring failure, the poppet is permitted to slide further to a third position where a second end of the poppet, opposite the first end of the poppet, engages a shoulder near the distal end of the chamber. In the third position, the sidewall of the poppet covers the outlet in the sidewall of the housing, thereby permitting normal flow of the fluid through the fluid distribution system.

### BRIEF DESCRIPTION OF THE DRAWINGS

The accompanying drawings, which are incorporated in and constitute a part of the specification, illustrate preferred embodiments of the invention and, together with the description, serve to explain the objects, advantages, and principles of the invention.
FIG. 1A is a cross-sectional side view of a prior art bypass valve.
FIG. 1B is a cross-sectional side view of the prior art bypass valve of FIG. 1A.
FIG. 1C is a cross-sectional side view of the prior art bypass valve of FIGS. 1A and 1B.
FIG. 2A is a cross-sectional side view of a bypass valve according to an embodiment of the disclosure.
FIG. 2B is a cross-sectional side view of the bypass valve of FIG. 2A.
FIG. 2C is a cross-sectional side view of the bypass valve of FIGS. 2A and 2B.
FIG. 3 is an oblique view of a gearbox according to an embodiment of the disclosure.
FIG. 4 is a schematic showing a fluid movement system according to an embodiment of the disclosure.

### DETAILED DESCRIPTION

It should be understood that although an illustrative implementation of one or more embodiments are provided below, the disclosed systems and methods may be implemented using any number of techniques, whether currently known or in existence. The disclosure should in no way be limited to the illustrative implementations, drawings, and techniques illustrated below, including the exemplary designs and implementations described herein, but may be modified with the scope of the appended claims along with their full scope of equivalents.

In the disclosure, reference may be made to the spatial relationships between various components and to the spatial orientation of various aspects of components as the devices are depicted in the attached drawings. However, as will be recognized by those skilled in the art after a complete reading of this disclosure, the devices, members, apparatuses, etc., and the components thereof described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

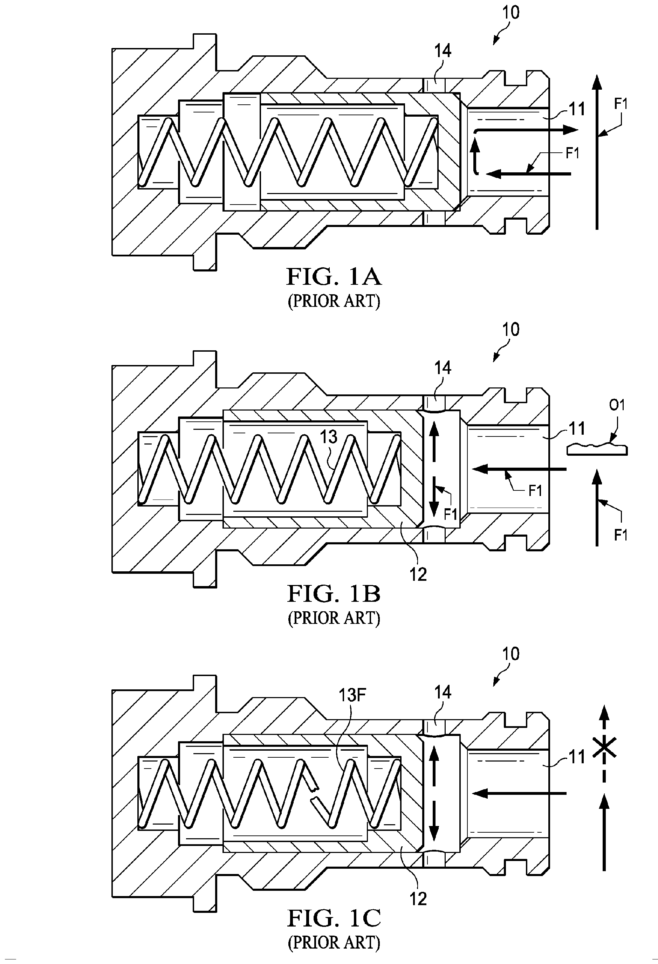

Referring to FIGS. 1A-1C, a prior art bypass valve 10 is illustrated. FIG. 1A shows the prior art valve 10 in a closed configuration. In the closed configuration, a fluid F1 flows past inlet 11. FIG. 1B shows the prior art valve 10 in an open configuration. In FIG. 1B, an obstruction O1 causes the pressure of the fluid F1 to increase. The increase in pressure applies a force to a poppet 12. The poppet 12 transfers the force to a spring 13, thereby compressing the spring 13 and allowing the poppet 12 to translate to the open configuration. In the open configuration, the fluid F1 flows through the inlet 11 and out an outlet 14. FIG. 1C shows the prior art valve in a spring failure configuration. FIG. 1C shows a failed spring 13F, which allows the fluid F1 to push the poppet 12 to the open position without a rise in the pressure of fluid F1. Since the bypass valve is open, a reduced amount or no fluid F1 is pumped to the upstream components.

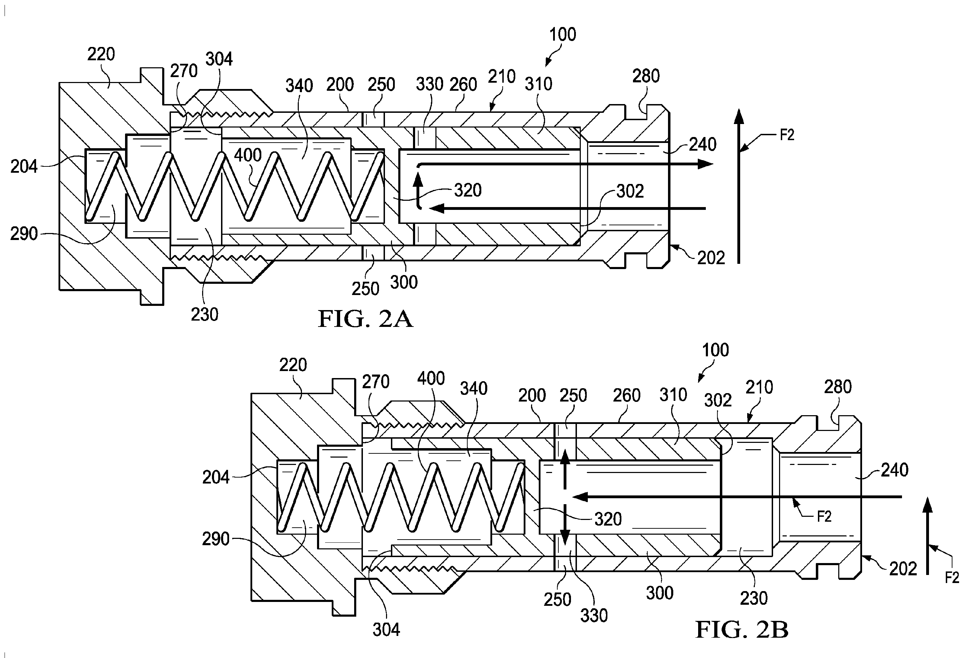

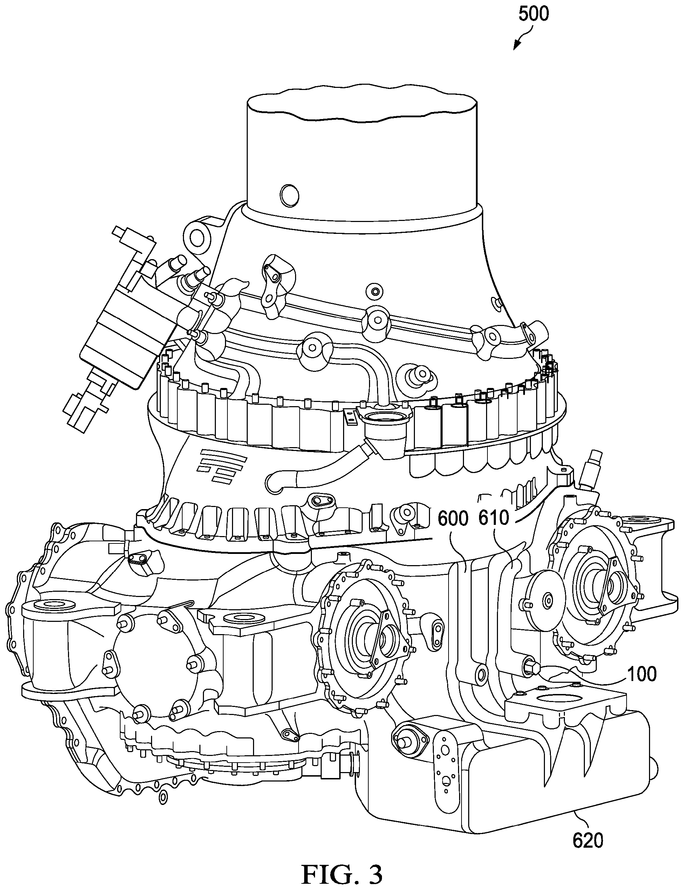

Referring to FIGS. 2A-2C, an improved bypass valve 100 is illustrated. The bypass valve 100 includes three basic components: a housing 200, a poppet 300, and a spring 400. The housing may include two pieces, a body 210 and a cap 220. The cap 220 and body 210 may include threads configured to form a connection therebetween. When assembled, the body 210 and the cap 220 define a chamber 230 therein. The chamber 230 is preferably generally cylindrical. However, the chamber 230 could be any suitable shape. The chamber 230 is in communication with an inlet 240 at a proximal end 202 of the housing 200. The chamber 230 is also in communication with one or more outlets 250 in a sidewall 260 of the housing 200. A stop 270 is located proximate a distal end 204 of the chamber 230. The stop 270 may comprise a shoulder or post or another other structure capable of engaging the poppet 300 and preventing further translation thereof. The structure may include one of more grooves 280 configured to receive an o-ring therein to facilitate a proper seal of the fluid movement system. The body 210 may include additional structure to facilitate attachment of the bypass valve 100 to the fluid channel. The attachment structure (not shown) may include external threads on the exterior of the body 210, internal threads on an interior of the inlet 240, additional grooves 280 configured to receive a snap-ring, or another means of facilitating attachment. The cap may also include structure for the engagement of a tool to assist in the attachment and/or removal of the bypass valve 100 to the fluid channel. The structure may include a hexagonal outer head (shown in FIG. 3), a hexagonal, star, Philips, or flathead impression configured to receive a rotational tool therein, or any other suitable engagement structure. The cap 220 may further include a recess 290 configured to receive and secure a spring 400 therein. The recess 290 may also be configured to receive shims between the cap 220 and the spring 400 to increase the force required to compress the spring 400 and thereby increase the allowable pressure in the fluid movement system.

The poppet 300 includes a generally cylindrical sidewall 310 which extends from a proximal end 302 to a distal end 304. The exterior surface of the sidewall 310 is sized and shaped to create a flush fit against the interior surface of the sidewall 260 of the body 210. The fit permitting the poppet 300 to translate within the chamber 230, but without permitting the fluid to pass between the exterior surface of the sidewall 310 and the interior surface of the sidewall 260. The poppet 300 also includes a partition 320 which extends from across the width of the poppet 300 between the proximal end 302 and the distal end 304. The poppet 300 also includes one or more openings 330 extending through the sidewall 310. The openings 330 are located between the partition 320 and the proximal end 302 of the poppet. The portion of the sidewall 310 between the opening 330 and the proximal end 302 should be longer than the width of the outlet 250 in the sidewall 260 of the body 210. The poppet 300 further includes a cavity 340 configured to receive the spring 400 therein.

The spring 400 is configured to bias the poppet 300 into a first position toward the inlet 240 of the housing 200, as shown in FIG. 2A. In the first position, some of the fluid F2 may enter the inlet 240 but it either remains in the chamber 230 or it flows back out the inlet 240. The pressure of the fluid F2 is felt by the partition 320 and that force is transferred to the spring 400. When the pressure of the fluid F2 increases to a predetermined level, the spring 400 is compressed, thereby allowing the poppet 300 to translate to a second position within the chamber 230, as shown in FIG. 2B. In the second position, the openings 330 are lined up with the outlets 250, thereby allowing the over pressurized fluid F2 to enter the chamber 230 through the inlet 240 and exit through the openings 330 and the outlets 250. If the pressure of the fluid F2 drops below the predetermined level, the spring 400 forces the poppet 300 back to the first position and the fluid movement system continues normal operation. It is important to note that the spring 400 should be configured to prevent the poppet 300 from additional translation due to excessive pressure. As such additional translation would close the valve and prevent pressure relief. This may be aided by making the outlets 250 and/or the openings 330 extend along a length of the chamber, thereby allowing bypass along a range of positions.

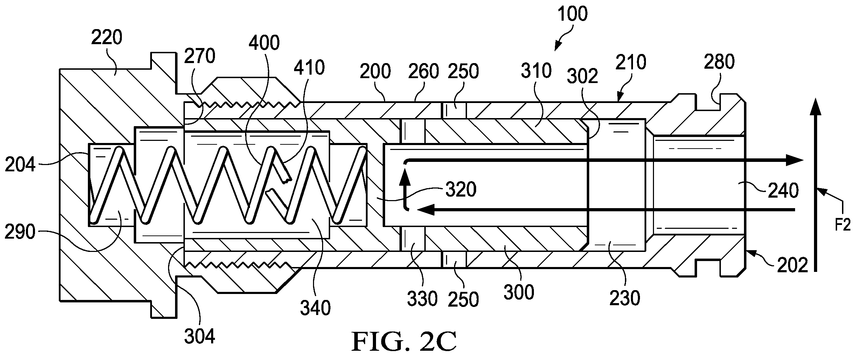

If the spring 400 suffers a spring failure 410, the poppet 300 translates to a third position, as shown in FIG. 2C. In the third position, the distal end 304 of the poppet 300 is in contact with the stop 270 and the sidewall 310 of the poppet covers the outlets 250. Accordingly, in the third position, the valve 100 functions similarly to first position. That is, the fluid F2 may enter the chamber 230 but the poppet 300 prevents the fluid F2 from exiting the outlets 250. Instead, the fluid F2 continues to move through the fluid movement system.

It the event of spring failure 410, the bypass valve 100, as configured in FIGS. 2A-2C, would no longer provide the over-pressurization protection for which it is intended. Accordingly, there are several additional features that may be included to provide additional safeguards. For example, the bypass valve 100 may include an additional spring (not shown) located between distal end 304 of the poppet 300 and the stop 270. In addition to the additional spring, the poppet 300 may include additional openings through the sidewall (not shown) which are proximal of the openings 330. In such an embodiment, the additional spring and additional openings would operate much like the spring 400 and the openings 330. In this embodiment, the poppet 300 would have five positions: first (closed, fully proximal), second (open, pressure compressing spring 400), third (closed, spring failure permits distal translation to contact the addition spring), fourth (open, pressure compressing the additional spring and aligning the additional openings with the outlets 250), and fifth (closed, additional spring failure). Alternatively, instead of the additional spring, the stops 270 could be designed to yield at a specific pressure, thereby permitting further translation of the poppet 300 to facilitate aligning the additional openings in the sidewall 310 with the outlets 250. An additional solution to the loss of over-pressurization protection following spring failure 410 may include placing two bypass valves 100 in series in the fluid movement system.

The bypass valve 100 may also include a spring failure indicator (not shown). The spring failure indicator may be physical indicator visible from the exterior of the bypass valve 100 while the valve is installed in a fluid movement system. For example, the indicator may be a brightly color peg configured to protrude from the cap 220 when the distal end 304 of the poppet 300 contacts the stop 270, signaling to an operator or mechanic that the bypass valve 100 needs to be replaced. Alternatively, the indicator may be a window near the stop 270 that enables the operator to see whether the poppet 300 is in the third position, signaling spring failure, and the need to replace the bypass valve 100. The indicator may also be electronic. For example the indicator may be a pressure sensor on stop 270 which is connected to a computer that notifies the operator of the spring failure.

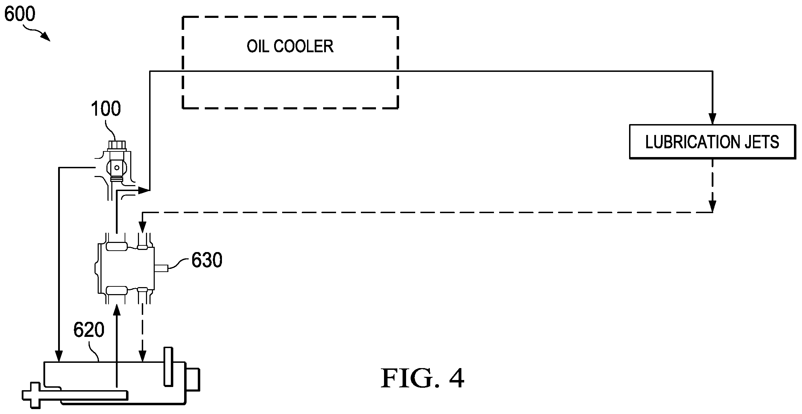

FIG. 3 shows a rotor gearbox 500 for use with a main rotor of a rotorcraft. The gearbox 500 is equipped with an oil distribution system 600. A schematic of the distribution system 600 is shown in FIG. 4. The oil distribution system 600 includes a channel 610 connecting the various components of the system 600. The distribution system 600 includes a sump 620 connected via the channel 610 to a pump 630. Downstream from the pump 630, the channel 610 includes an opening configured to receive the bypass valve 100 therein. The oil distribution system 600 may also include an oil cooler, oil filter, and lubrication jets. The oil distribution system 600 may also include additional bypass valves, spring biased pressure regulators, and pressure transducers that may include a similar structure to prevent spring failure from completely shutting down the flow of oil in the system 600.

It should be noted that, while the bypass valve is described in connection with an oil distribution system on a rotor gearbox for a rotorcraft, the bypass valve could be utilized to protect any pressurized fluid distribution system. For example, oil distribution on an internal combustion engine or a turbine engine, or in a hydraulic drive system.

At least one embodiment is disclosed, and variations, combinations, and/or modifications of the embodiment(s) and/or features of the embodiment(s) made by a person having ordinary skill in the art are within the scope of the disclosure which is solely defined by the appended claims.

Alternative embodiments that result from combining, integrating, and/or omitting features of the embodiment(s) are also within the scope of the disclosure.

## Claims

1. A bypass valve (100), comprising:
a housing (200) defining a chamber (230), the housing (200) including an inlet (240) and an outlet (250) in a sidewall (260) of the housing (200), both in communication with the chamber (230), the chamber (230) including a distal end (204) opposite the inlet (240), a shoulder (270) proximate the distal end (204), a length extending from the distal end (204) to the inlet (240), and a width transverse to the length;
a poppet (300) configured to fit within and translate along at least a portion of the length of the chamber (230), the poppet (300) including a first end (302) configured to be oriented toward the inlet (240), a second end (304) opposite the first end (302), and a partition (320) configured to extend across the width of the chamber (230), the poppet (300) further including a sidewall (310) extending from the partition (320) to the first end (302), the sidewall (310) including an opening (330) therethrough, the partition (320) being configured to contact a fluid; and
a spring (400) configured to fit within the chamber (230) and to bias the poppet (300) towards a first position wherein the poppet (300) prevents communication between the inlet (240) and the outlet (250) when the fluid in contact with the partition (320) has a pressure less than or equal to a limit, the spring (400) being further configured to compress, thereby allowing the poppet (300) to translate to a second position wherein the opening (330) in the sidewall (310) of the poppet (300) aligns with the outlet (250) in the sidewall (260) of the housing (200) when the pressure of the fluid in contact with the partition is greater than the limit, thereby placing the inlet (240) and the outlet (250) in communication and allowing the fluid to pass therethrough;
wherein failure of the spring (400) would permit the poppet (300) to translate to a third position wherein the second end (304) of the poppet (300) contacts the shoulder (270) and the sidewall (310) of the poppet (300) prevents communication between the inlet (240) and the outlet (250), and **characterized in that** the bypass valve (100) is configured to prevent the poppet (300) from translating to the third position due to excessive pressure of the fluid.

2. A fluid movement system (600), comprising:
a channel (610) configured to permit the movement of a fluid therethrough;
a pump (630) connected to the channel (610), wherein the pump (630) is configured to move the fluid through the channel (610); and
the bypass valve (100) of claim 1, wherein the bypass valve (100) is connected to the channel (610) downstream of from the pump (630).

3. The bypass valve (100) of claim 1 or the fluid movement system (600) of claim 2, wherein the housing (200) comprises a body (210) and a cap (220), the cap (220) being configured to threadably engage the body (210).

4. The bypass valve (100) or the fluid movement system (600) of claim 3, wherein the chamber (230) includes a recess (290) distal of the shoulder (270), the recess (290) being configured to receive a distal end of the spring (400), and wherein the poppet (300) further includes a cavity (340) distal of the partition (320) configured to receive a proximal end of the spring (400).

5. The bypass valve (100) or the fluid movement system (600) of claim 4, wherein the chamber (200) is at least in part cylindrical and an outer surface of the poppet (300) is at least in part cylindrical.

6. The bypass valve (100) or the fluid movement system (600) of claim 5, wherein an exterior of the cap (220) is configured for engagement with a tool.

7. The bypass valve (100) or the fluid movement system (600) of claim 6, further comprising a spring failure indicator.

8. The bypass valve (100) or the fluid movement system (600) of claim 7, wherein the housing (200) includes a second outlet (250) and the poppet (300) includes a second opening (330) in the sidewall (310).

9. The bypass valve (100) of any preceding bypass valve claim or the fluid movement system (600) of any preceding fluid movement system claim, the bypass valve (100) further comprising:
a second spring (400) between the poppet (300) and the shoulder (270).

10. The bypass valve (100) of any preceding bypass valve claim or the fluid movement system (600) of any preceding fluid movement system claim, the bypass valve (100) further comprising:
an additional opening in the sidewall (310) of the poppet (300), the additional opening being between the opening (330) and the first end (302).

11. The bypass valve (100) or the fluid movement system (600) of claim 10 when not dependent on claim 9, wherein the shoulder (270) is configured to yield when subjected to a specific force, thereby allowing the poppet (300) to translate to a fourth position wherein the additional opening in the sidewall (310) of the poppet (300) aligns with the outlet (250) in the sidewall (260) of the housing (200), thereby placing the inlet (240) and the outlet (250) in communication and allowing the fluid to pass therethrough.

12. The fluid movement system (600) of any preceding fluid movement system claim, further comprising:
a second bypass valve (100) connected in series with the bypass valve (100).

13. The bypass valve (100) or the fluid movement system (600) of claim 7, wherein the spring fail indicator comprises:
a peg configured to protrude when the second end (304) of the poppet (300) contacts the shoulder (270) of the housing (200).

14. The bypass valve (100) or the fluid movement system (600) of claim 7, wherein the spring fail indicator comprises:
a window that enables an operator to see whether the poppet (300) is in the third position.

15. The bypass valve (100) or the fluid movement system (600) of claim 7, wherein the spring fail indicator comprises:
a pressure sensor that triggers an electronic notification.

## Patentansprüche

1. Bypassventil (100), umfassend:
ein Gehäuse (200), das eine Kammer (230) definiert, wobei das Gehäuse (200) einen Einlass (240) und einen Auslass (250) in einer Seitenwand (260) des Gehäuses (200) beinhaltet, beide in Verbindung mit der Kammer (230), wobei die Kammer (230) ein distales Ende (204) gegenüber dem Einlass (240), eine Schulter (270) nahe dem distalen Ende (204), eine Länge, die sich vom distalen Ende (204) bis zum Einlass (240) erstreckt, und eine Breite quer zur Länge aufweist;
einen Ventilkegel (300), der konfiguriert ist, um in mindestens einen Abschnitt der Länge der Kammer (230) zu passen und sich entlang diesem zu verschieben, wobei der Ventilkegel (300) ein erstes Ende (302), das konfiguriert ist, um in Richtung des Einlasses (240) ausgerichtet zu sein, ein zweites Ende (304) gegenüber dem ersten Ende (302) und eine Trennwand (320) beinhaltet, die konfiguriert ist, um sich über die Breite der Kammer (230) zu erstrecken, wobei der Ventilkegel (300) weiterhin eine Seitenwand (310) beinhaltet, die sich von der Trennwand (320) bis zum ersten Ende (302) erstreckt, wobei die Seitenwand (310) eine Öffnung (330) durch sie hindurch beinhaltet, wobei die Trennwand (320) konfiguriert ist, um ein Fluid zu kontaktieren; und
eine Feder (400), die konfiguriert ist, um in die Kammer (230) zu passen und den Ventilkegel (300) in Richtung einer ersten Position vorzuspannen, wobei der Ventilkegel (300) die Verbindung zwischen dem Einlass (240) und dem Auslass (250) verhindert, wenn das Fluid, das mit der Trennwand (320) in Kontakt steht, einen Druck von weniger als oder gleich eines Grenzwerts aufweist, wobei die Feder (400) weiterhin konfiguriert ist, zusammenzudrücken, wodurch der Ventilkegel (300) in eine zweite Position verschoben werden kann, wobei die Öffnung (330) in der Seitenwand (310) des Ventilkegels (300) mit dem Auslass (250) in der Seitenwand (260) des Gehäuses (200) ausgerichtet ist, wenn der Druck des Fluids in Kontakt mit der Trennwand größer als der Grenzwert ist, wodurch der Einlass (240) und der Auslass (250) in Verbindung gebracht werden und das Fluid durch sie hindurchtreten kann;
wobei ein Versagen der Feder (400) es dem Ventilkegel (300) ermöglichen würde, sich in eine dritte Position zu verschieben, in der das zweite Ende (304) des Ventilkegels (300) die Schulter (270) und die Seitenwand (310) des Ventilkegels (300) berührt, um eine Verbindung zwischen dem Einlass (240) und dem Auslass (250) zu verhindern, und **dadurch gekennzeichnet, dass** das Bypassventil (100) konfiguriert ist, um zu verhindern, dass der Ventilkegel (300) aufgrund eines übermäßigen Drucks des Fluids in die dritte Position übergeht.

2. Fluidbewegungssystem (600), umfassend:
einen Kanal (610), der konfiguriert ist, um die Bewegung eines Fluids durch ihn hindurch zu ermöglichen;
eine Pumpe (630), die mit dem Kanal (610) verbunden ist, wobei die Pumpe (630) konfiguriert ist, um das Fluid durch den Kanal (610) zu bewegen; und
das Bypassventil (100) nach Anspruch 1, wobei das Bypassventil (100) mit dem Kanal (610) stromabwärts der Pumpe (630) verbunden ist.

3. Bypassventil (100) nach Anspruch 1 oder Fluidbewegungssystem (600) nach Anspruch 2, wobei das Gehäuse (200) einen Körper (210) und eine Kappe (220) umfasst, wobei die Kappe (220) konfiguriert ist, um in den Körper (210) gewindemäßig einzugreifen.

4. Bypassventil (100) oder Fluidbewegungssystem (600) nach Anspruch 3, wobei die Kammer (230) eine Aussparung (290) distal der Schulter (270) aufweist, wobei die Aussparung (290) konfiguriert ist, um ein distales Ende der Feder (400) aufzunehmen, und wobei der Ventilkegel (300) weiterhin einen Hohlraum (340) distal der Trennwand (320) aufweist, der konfiguriert ist, um ein proximales Ende der Feder (400) aufzunehmen.

5. Bypassventil (100) oder Fluidbewegungssystem (600) nach Anspruch 4, wobei die Kammer (200) zumindest teilweise zylindrisch und eine Außenfläche des Ventilkegels (300) zumindest teilweise zylindrisch ist.

6. Bypassventil (100) oder Fluidbewegungssystem (600) nach Anspruch 5, wobei eine Außenseite der Kappe (220) für den Eingriff mit einem Werkzeug konfiguriert ist.

7. Bypassventil (100) oder Fluidbewegungssystem (600) nach Anspruch 6, weiterhin umfassend eine Federausfallanzeige.

8. Bypassventil (100) oder Fluidbewegungssystem (600) nach Anspruch 7, wobei das Gehäuse (200) einen zweiten Auslass (250) und der Ventilkegel (300) eine zweite Öffnung (330) in der Seitenwand (310) aufweist.

9. Bypassventil (100) nach einem der vorstehenden Bypassventil-Ansprüche oder Fluidbewegungssystem (600) nach einem der vorstehenden Fluidbewegungssystem-Ansprüche, wobei das Bypassventil (100) weiterhin umfasst:
eine zweite Feder (400) zwischen dem Ventilkegel (300) und der Schulter (270).

10. Bypassventil (100) nach einem der vorstehenden Bypassventil-Ansprüche oder Fluidbewegungssystem (600) nach einem der vorstehenden Fluidbewegungssystem-Ansprüche, wobei das Bypassventil (100) weiterhin umfasst:
eine zusätzliche Öffnung in der Seitenwand (310) des Ventilkegels (300), wobei sich die zusätzliche Öffnung zwischen der Öffnung (330) und dem ersten Ende (302) befindet.

11. Bypassventil (100) oder das Fluidbewegungssystem (600) nach Anspruch 10, soweit nicht von Anspruch 9 abhängig, wobei die Schulter (270) konfiguriert ist, um bei einer bestimmten Kraft nachzugeben, wodurch der Ventilkegel (300) in eine vierte Position verschoben werden kann, wobei die zusätzliche Öffnung in der Seitenwand (310) des Ventilkegels (300) mit dem Auslass (250) in der Seitenwand (260) des Gehäuses (200) ausgerichtet ist, wodurch der Einlass (240) und der Auslass (250) in Verbindung stehen und das Fluid durch sie hindurchtreten kann.

12. Fluidbewegungssystem (600) nach einem der vorstehenden Fluidbewegungssystem-Ansprüche, weiterhin umfassend:
ein zweites Bypassventil (100), das in Reihe mit dem Bypassventil (100) geschaltet ist.

13. Bypassventil (100) oder das Fluidbewegungssystem (600) nach Anspruch 7, wobei die Federausfallanzeige umfasst:
einen Stift, der konfiguriert ist, um vorzustehen, wenn das zweite Ende (304) des Ventilkegels (300) die Schulter (270) des Gehäuses (200) berührt.

14. Bypassventil (100) oder das Fluidbewegungssystem (600) nach Anspruch 7, wobei die Federausfallanzeige umfasst:
ein Fenster, das es einem Bediener ermöglicht, zu sehen, ob sich der Ventilkegel (300) in der dritten Position befindet.

15. Bypassventil (100) oder das Fluidbewegungssystem (600) nach Anspruch 7, wobei die Federausfallanzeige umfasst:
einen Drucksensor, der eine elektronische Benachrichtigung auslöst.

## Revendications

1. Soupape de dérivation (100), comprenant :
un logement (200) définissant une chambre (230), le logement (200) incluant une entrée (240) et une sortie (250) dans une paroi latérale (260) du logement (200), l'une et l'autre en communication avec la chambre (230), la chambre (230) incluant une extrémité distale (204) opposée à l'entrée (240), un épaulement (270) à proximité de l'extrémité distale (204), une longueur s'étendant de l'extrémité distale (204) à l'entrée (240), et une largeur transversale à la longueur ;
un champignon (300) configuré pour s'installer à l'intérieur et se déplacer en translation le long d'au moins une partie de la longueur de la chambre (230), le champignon (300) incluant une première extrémité (302) configurée pour être orientée vers l'entrée (240), une deuxième extrémité (304) opposée à la première extrémité (302), et une séparation (320) configurée pour s'étendre à travers la largeur de la chambre (230), le champignon (300) incluant en outre une paroi latérale (310) s'étendant de la séparation (320) à la première extrémité (302), la paroi latérale (310) incluant une ouverture (330) à travers celle-ci, la séparation (320) étant configurée pour venir en contact avec un fluide ; et
un ressort (400) configuré pour s'installer à l'intérieur de la chambre (230) et pour solliciter le champignon (300) en direction d'une première position dans laquelle le champignon (300) empêche une communication entre l'entrée (240) et la sortie (250) lorsque le fluide en contact avec la séparation (320) a une pression inférieure ou égale à une limite, le ressort (400) étant configuré en outre pour exercer une compression, ce qui permet au champignon (300) de se déplacer par translation à une deuxième position dans laquelle l'ouverture (330) dans la paroi latérale (310) du champignon (300) s'aligne avec la sortie (250) dans la paroi latérale (260) du logement (200) lorsque la pression du fluide en contact avec la séparation est supérieure à la limite, ce qui place l'entrée (240) et la sortie (250) en communication et permet au fluide de passer à travers celles-ci ;
dans laquelle une défaillance du ressort (400) permettrait au champignon (300) de se déplacer par translation à une troisième position dans laquelle la deuxième extrémité (304) du champignon (300) vient en contact avec l'épaulement (270) et la paroi latérale (310) du champignon (300) empêche une communication entre l'entrée (240) et la sortie (250), et **caractérisée en ce que** la soupape de dérivation (100) est configurée pour empêcher le champignon (300) de se déplacer par translation à la troisième position en raison d'une pression excessive du fluide.

2. Système de mouvement de fluide (600), comprenant :
un canal (610) configuré pour permettre le mouvement d'un fluide à travers celui-ci ;
une pompe (630) raccordée au canal (610), dans lequel la pompe (630) est configurée pour déplacer le fluide à travers le canal (610) ; et
la soupape de dérivation (100) selon la revendication 1, dans lequel la soupape de dérivation (100) est raccordée au canal (610) en aval de la pompe (630).

3. Soupape de dérivation (100) selon la revendication 1 ou système de mouvement de fluide (600) selon la revendication 2, dans lequel le logement (200) comprend un corps (210) et une coiffe (220), la coiffe (220) étant configurée pour venir en prise par filetage avec le corps (210).

4. Soupape de dérivation (100) ou système de mouvement de fluide (600) selon la revendication 3, dans lequel la chambre (230) inclut un évidement (290) distal de l'épaulement (270), l'évidement (290) étant configuré pour recevoir une extrémité distale du ressort (400), et dans lequel le champignon (300) inclut en outre une cavité (340) distale de la séparation (320) configurée pour recevoir une extrémité proximale du ressort (400).

5. Soupape de dérivation (100) ou système de mouvement de fluide (600) selon la revendication 4, dans lequel la chambre (200) est au moins en partie cylindrique et une surface externe du champignon (300) est au moins en partie cylindrique.

6. Soupape de dérivation (100) ou système de mouvement de fluide (600) selon la revendication 5, dans lequel un extérieur de la coiffe (220) est configuré pour mise en prise avec un outil.

7. Soupape de dérivation (100) ou système de mouvement de fluide (600) selon la revendication 6, comprenant en outre un indicateur de défaillance de ressort.

8. Soupape de dérivation (100) ou système de mouvement de fluide (600) selon la revendication 7, dans lequel le logement (200) inclut une deuxième sortie (250) et le champignon (300) inclut une deuxième ouverture (330) dans la paroi latérale (310).

9. Soupape de dérivation (100) selon l'une quelconque revendication de soupape de dérivation qui précède ou système de mouvement de fluide (600) selon l'une quelconque revendication de système de mouvement de fluide qui précède, la soupape de dérivation (100) comprenant en outre :
un deuxième ressort (400) entre le champignon (300) et l'épaulement (270).

10. Soupape de dérivation (100) selon l'une quelconque revendication de soupape de dérivation qui précède ou système de mouvement de fluide (600) selon l'une quelconque revendication de système de mouvement de fluide qui précède, la soupape de dérivation (100) comprenant en outre :
une ouverture supplémentaire dans la paroi latérale (310) du champignon (300), l'ouverture supplémentaire étant entre l'ouverture (330) et la première extrémité (302).

11. Soupape de dérivation (100) ou système de mouvement de fluide (600) selon la revendication 10 lorsqu'elle ne dépend pas de la revendication 9, dans lequel l'épaulement (270) est configuré pour céder lorsqu'il est soumis à une force spécifique, ce qui permet au champignon (300) de se déplacer par translation à une quatrième position dans lequel l'ouverture supplémentaire dans la paroi latérale (310) du champignon (300) s'aligne avec la sortie (250) dans la paroi latérale (260) du logement (200), ce qui place l'entrée (240) et la sortie (250) en communication et permet au fluide de passer à travers celles-ci.

12. Système de mouvement de fluide (600) selon l'une quelconque revendication de système de mouvement de fluide qui précède, comprenant en outre :
une deuxième soupape de dérivation (100) raccordée en série à la soupape de dérivation (100).

13. Soupape de dérivation (100) ou système de mouvement de fluide (600) selon la revendication 7, dans lequel l'indicateur de défaillance de ressort comprend :
une cheville configurée pour faire saillie lorsque la deuxième extrémité (304) du champignon (300) vient en contact avec l'épaulement (270) du logement (200).

14. Soupape de dérivation (100) ou système de mouvement de fluide (600) selon la revendication 7, dans lequel l'indicateur de défaillance de ressort comprend :
une fenêtre qui permet à un opérateur de voir si le champignon (300) est dans la troisième position.

15. Soupape de dérivation (100) ou système de mouvement de fluide (600) selon la revendication 7, dans lequel l'indicateur de défaillance de ressort comprend :
un capteur de pression qui déclenche une notification électronique.
